# Europäisches Patentamt
# European Patent Office
# Office européen des brevets

(11) Veröffentlichungsnummer: **0 007 444**
**B1**

(12) # EUROPÄISCHE PATENTSCHRIFT

(45) Veröffentlichungstag der Patentschrift:
**12.08.81**

(51) Int. Cl.³: **C 08 G 63/46,** C 08 G 63/68,
C 08 K 5/52

(21) Anmeldenummer: **79102102.5**

(22) Anmeldetag: **25.06.79**

(54) Verfahren zur Herstellung linearer lichtstabilisierter mattierter Polyester.

(30) Priorität: **29.06.78 DE 2828464**

(43) Veröffentlichungstag der Anmeldung:
**06.02.80 Patentblatt 80/3**

(45) Bekanntmachung des Hinweises auf die Patenterteilung:
**12.08.81 Patentblatt 81/32**

(84) Benannte Vertragsstaaten:
**BE CH DE FR GB IT NL**

(56) Entgegenhaltungen:
**DD-A-102 714**
**DE-A1-2 412 216**
**DE-B-1 152 259**
**US-A-3 070 578**

(73) Patentinhaber: **HOECHST AKTIENGESELLSCHAFT,
Zentrale Patentabteilung Postfach 80 03 20,
D-6230 Frankfurt/Main 80 (DE)**

(72) Erfinder: **Blöcker, Erich, Dr., Cheruskerstrasse 7,
D-6238 Hofheim am Taunus (DE)**
Erfinder: **Jakob, Franz, Dr., Schlossstrasse 34,
D-6238 Hofheim am Taunus (DE)**

Verfahren zur Herstellung linearer lichtstabilisierter mattierter Polyester

Die Erfindung bezieht sich auf ein Verfahren zur Herstellung linearer mattierter Polyester durch Umsetzung von Terephthalsäure und Glykolen mit 2 bis 10 C-Atomen nach dem Terephthalsäure-Direktveresterungsverfahren unter Zusatz von Sauerstoffverbindungen des Phosphors.

Die seit langem bekannten und industriell hergestellten Polyester haben im allgemeinen eine für die praktischen Verwendungszwecke gute oder sehr gute Lichtbeständigkeit. Die für den textilen Bereich verwendeten synthetischen linearen Polyester auf Basis der Terephthalsäure und Glykolen, z. B. das Polyethylenterephthalat und das Polybutylenterephthalat, besitzen in der Form von Fasern, Fäden und Folien ebenfalls eine recht gute Lichtbeständigkeit.

Diese Polyester wurden bisher in großem Umfange nach dem Umesterungsverfahren aus Dimethylterephthalat mit einem Glykol und anschließender Polykondensation hergestellt. Bei dem Umesterungsverfahren werden dem Reaktionsgemisch zum Zwecke einer Beschleunigung der Reaktionsgeschwindigkeit Salze zweiwertiger Metalle, insbesondere Salze des Calciums, Magnesiums, Mangans oder Zinks, zugesetzt. Diese Katalysatoren bewirken jedoch bei der nachfolgenden Polykondensation bekanntermaßen unerwünschte Effekte, wie in der DE-AS 1 152 259 und in der DE-OS 2 412 216 beschrieben. Zur Vermeidung dieser unerwünschten Effekte des Umesterungskatalysators werden dem Reaktionsgemisch nach der Umesterung Phosphorverbindungen zugesetzt, die sich mit den Katalysatoren zu inaktiven Verbindungen umsetzen. Zu den bekannten Inaktivatoren gehören Phosphorsäure, phosphorige Säure, Phosphonsäuren sowie deren Salze und Ester.

Zur Polykondensation werden dann dem Reaktionsgemisch ein Polykondensationskatalysator — im allgemeinen eine Antimon-, Germanium- oder Titanverbindung — sowie im Bedarfsfall mattierende Pigmente wie z. B. Titandioxid zugesetzt, die den Glanz und die Farbe der aus dem Polyester hergestellten Fasern und Fäden beeinflussen.

Als Titandioxid-Pigmente können sowohl Anatas-Typen als auch Rutyil-Typen eingesetzt werden, wobei für Fasern und Fäden im allgemeinen Anatas-Typen bevorzugt werden, da die härteren Rutil-Pigmente zu einem erhöhten Abrieb an Fadenleitorganen und Walzen bei der Verspinnung und Verstreckung führen. Es ist bekannt, daß Titandioxid-Pigmente den Lichtabbau von vielen Polymeren sowie von Farbstoffen durch katalysierte Photooxudation fördern. Bei den nicht-modifizierten handelsüblichen Polyethylenterephthalaten, die über Dimethylterephthalat hergestellt wurden, ist der photochemische Einfluß der Titandioxidpigmente gering, d. h. es bestehen praktisch keine Unterschiede in der Lichtbeständigkeit von mattierten Fasern und Fäden mit den in der Praxis üblichen bis zu 2,0 Gew.-% $TiO_2$-Gehalten gegenüber unmattierten Fasern und Fäden.

Ein anderes wirtschaftliches Verfahren zur technischen Herstellung von Terephthalsäure-Polyestern geht von der Terephthalsäure aus an Stelle des Dimethylterephthalats. Sehr reine »fibergrade« Terephthalsäure wird mit etwas mehr als der molaren Menge eines Glykols, im allgemeinen Ethylenglykol, in einem Druckreaktor bei Temperaturen zwischen 200 und 300° C zu einem oligomeren Terephthalsäureester-Gemisch und ohne Verwendung eines Umesterungskatalysators umgesetzt (siehe: H. Ludewig, »Polyesterfasern«, 2. Auflage, Berlin 1975, S. 103—105).

Danach wird bei Normaldruck weiter verestert und anschließend polykondensiert, wobei die einzelnen Verfahrensschritte sowohl diskontinuierlich als auch kontinuierlich durchgeführt werden können.

Werden auf diese Weise aus Terephthalsäure und Glykolen mit $TiO_2$-Pigmenten mattierte Polyester hergestellt, so weisen überraschenderweise die daraus hergestellten Fasern und Fäden eine verringerte Lichtbeständigkeit auf im Vergleich zu Fasern und Fäden aus dem gleichen Polyesterrohstoff, der nach dem DMT-Umesterungsverfahren hergestellt wurde. Unmattierte Fasern und Fäden zeigen dagegen keinen Unterschied in ihrer Lichtbeständigkeit in Abhängigkeit von dem Herstellungsverfahren des Polyesterrohstoffes. Die verringerte Lichtbeständigkeit der mattierten Fasern und Fäden macht sich in einer stärkeren Abnahme der textilen Eigenschaften, d. h. der Reißfestigkeit und der Reißdehnung, in Abhängigkeit von der Belichtungszeit bemerkbar. Die Lichtbeständigkeit der nach dem Terephthalsäure-Direktveresterungsverfahren hergestellten Fasern und Fäden ist abhängig von der Menge des zugesetzten $TiO_2$-Pigmentes, d. h. je höher der Mattierungsgrad desto stärker ist der Lichtabbau des Polyesters.

Die Ursache der unterschiedlichsten Lichtbeständigkeit mattierter Polyester-Fasern und -Fäden nach dem Direktveresterungs- und nach dem Umesterungsverfahren muß in dem Fehlen einer im allgemeinen im Polyester schwerlöslichen Verbindung des Umesterungskatalysators mit dem Fhosphor-Stabilisator beim Direktveresterungsverfahren zu suchen sein. Eine mögliche Erklärung ist, daß diese salzartige Metall-Phosphor-Verbindung die photochemisch aktiven Zentren des $TiO_2$-Pigmentes blockiert, auch wenn das $TiO_2$ erst nach Bildung der Verbindung dem Polyester zugesetzt wird.

Wie in der DD-PS 102 714 beschrieben, kann die Lichtbeständigkeit von mattierten Polyestern nach dem Direktveresterungsverfahren wieder verbessert werden durch Zusatz eines Mangan- oder Kobaltphosphats oder -phosphits. Dies führt dazu, daß man im Prinzip wieder den gleichen Polyester hat wie nach einem Umesterungsverfahren mit einem Mangan- oder Kobaltsalz und anschließender Stabilisierung mit Phosphorsäure, phosphoriger Säure oder deren Estern. Diese im Polyester entstehenden Metall-Phosphor-Verbindungen sind im allgemeinen schwer löslich und führen zu mehr oder weniger feinverteilten Niederschlägen, die in unmattiertem Polyester als Schmutzteilchen mikroskopisch zu erkennen sind. Diese können naturgemäß in kontinuierlichen Produktionsanlagen zu Ablagerungen führen oder auch beim Spinn- und Streckprozeß durch Auftreten von Agglomeraten oder groben Partikeln Störungen verursachen, z. B. Filter verstopfen oder Fadenbrüche herbeiführen. Durch den nachträglichen Zusatz von z. B. Manganphosphat zum Direktveresterungsprodukt aus Terephthalsäure und Polymethylenglykolen, wie in der DD-PS beschrieben, gehen demgemäß die technischen Vorteile des Direktveresterungsverfahrens, die die Qualität des Polyester-Rohstoffs betreffen, wieder verloren.

Es wurde nun beobachtet, daß auch ein Zusatz von neutralen Estern der Phosphorsäure, z. B. der niederen Trialkylester, eine gewisse Lichtstabilisierung des nach dem Direktveresterungsverfahren hergestellten mattierten Polyesters bewirken kann. Als allgemeine Polyesterstabilisatoren zur Blockierung des Umesterungskatalysators sind in vielen Patentschriften neutrale und saure Ester der Phosphorsäure und der phosphorigen Säure beschrieben, z. B. in der DE-AS 1 152 259 und der DE-OS 2 154 503. Die neutralen Alkylester der Phosphorsäure reagieren zwar auch mit den zweiwertigen Metallionen der Umesterungskatalysatoren genau so wie die Phosphorsäure selbst zu schwer löslichen Metallphosphaten, allerdings ist die Reaktionsgeschwindigkeit der Umsetzung mit den Phosphorsäureestern erheblich, d. h. um Größenordnungen, geringer, da dies keine schnelle Ionenreaktion mehr ist. Deshalb sind unter den angewandten Betriebsbedingungen die neutralen Ester der genannten Gattung bereits merklich flüchtig, wie auch in der DE-OS 2 412 216 ausgeführt. Bei einer Stabilisierung von Polyestern nach dem Direktveresterungsverfahren ist das Problem der Flüchtigkeit der zugesetzten Stabilisatorverbindung noch erheblich verstärkt, da ein zweiwertiges Metallkation fehlt, das mit der P-Verbindung reagieren kann.

Der Erfindung liegt die Aufgabe zugrunde, Stabilisatoren zu finden, welche die photochemische Aktivität von $TiO_2$-Pigmenten blockieren und außerdem eine nur sehr geringe Flüchtigkeit während des unter Vakuum stattfindenden Polykondensationsprozesses aufweisen. Außerdem sollen sie leicht zu handhaben und zu dosieren sein, keine Ablagerungen in den Reaktoren bilden, zu thermisch stabilen und farblich einwandfreien Endprodukten führen, die Rückgewinnung des Glykols nicht erschweren und keine den Prozeßablauf störende Substanzen in das Reaktionsgemisch einschleppen. Die in der DE-AS 1 152 259 auch schon genannten sauren Phosphorsäureester, das sind nur teilweise veresterte Phosphorsäuren, sind zwar nicht flüchtig, haben aber erhebliche Nachteile als Polyester-Zusatzmittel, da sie als Säuren die Bildung von Diethylenglykol aus dem Ethylenglykol fördern. Dieses ist als Nebenprodukt unerwünscht, da es als Diol ebenfalls in das Polyestermolekül eingebaut wird und die Polyester-Eigenschaften, z. B. den Schmelzpunkt, negativ beeinflußt.

Es wurde nun gefunden, daß diese Aufgabe dadurch gelöst wird, daß während der nach der Druckveresterungsstufe folgenden Veresterungs- und/oder Polykondensationsreaktion als Sauerstoffverbindungen des Phosphors zur Lichtstabilisierung Phosphorsäuretriester zugesetzt werden, die 1 oder 2 Alkylgruppen mit 1 bis 4 C-Atomen sowie gleichzeitig 2 oder 1 Alkylenglykol- oder Polyalkylenglykol-Gruppen enthalten, wobei die Alkylengruppen aus 2 bis 4 C-Atomen bestehen, und daß die Polyester mit $TiO_2$ mattiert werden. Die nicht mit Alkylgruppen substituierten Säuregruppen der Phosphorsäure, d. h. entweder 2 oder 1 Säuregruppe, sind gleichzeitig verestert mit einem Glykolrest, einem Diglykol-, Triglykol- oder Polyglykol-Rest. Die bevorzugte Ausführungsform verwendet Mischungen von Phosphorsäuretriestern die außer 1 oder 2 niederen Alkylgruppen Mono- bis Polyalkylenglykolgruppen als Ester-Gruppen enthalten. Als Alkylenglykole und Polyalkylenglykoläther kommen solche Verbindungen in Frage, die 2 bis 4 C-Atome pro Alkylengruppe besitzen, z. B. Ethylenglykol, 1,2-Propandiol, 1,3-Propandiol, 1,2-Butandiol, 1,3-Butandiol, 1,4-Butandiol sowie deren di-, oligo- und polymere Äther. Die Polyester werden mit $TiO_2$ mattiert.

Vorzugsweise entspricht die Menge der zugesetzten Phosphor-Verbindung einem Phosphor-Gehalt im Polyester von 10 bis 500 mg/kg insbesondere 20 – 500 mg/kg, bezogen auf den fertigen Polyester. Die erfindungsgemäß eingesetzten gemischten Phosphorsäuretriester werden bevorzugt hergestellt durch Umsetzung eines sauren Mono- oder Dialkylphosphats oder einer Mischung derselben mit einem Alkylenoxid mit 2 bis 4 C-Atomen nach bekannten Verfahren ohne Verwendung eines Lösungsmittels oder Katalysators. Das Alkylenoxid addiert sich an die freien Hydroxylgruppen der sauren Alkylphosphate unter Bildung von 2-Hydroxyalkyl-Estergruppen. Die Alkylenoxid-Addition bleibt aber nicht bei dieser Monoaddition stehen, sondern die Reaktionsmischung durch noch freie Säuregruppen sauer reagiert, addiert sich das Alkylenoxid auch an die endständigen Hydroxylgruppen der schon addierten Alkylenoxid-Einheiten (siehe: Houben Weyl, Methoden der Organischen Chemie, Stuttgart 1964, Bd. XII/2, S. 307).

Dadurch entstehen Polyalkylenglykoläther als Ester-Gruppen von verschiedener Kettenlänge. Wenn gegen Ende der Reaktion die Konzentration der Säuregruppen stark abnimmt, bilden sich nur noch Monoadditionsprodukte, die analytisch durch Verseifung und gaschromatographische Bestimmung in Mengen von einigen Gewichtsprozent nachweisbar sind. Die Alkylenoxidaddition wird so lange fortgesetzt, bis das entstehende Phosphorsäureester-Gemisch eine Säurezahl kleiner als 1 aufweist, d. h. praktisch kaum noch Alkylenoxid aufnimmt.

Die Säurezahl (SZ) ist definiert als die Menge Kaliumhydroxid in mg, die zur Neutralisation von 1 g Substanz erforderlich ist (siehe: Römpp, Chemie Lexikon, 6. Auflage, Stuttgart 1966, Bd. II, Sp. 2037/8). Eine genaue Beschreibung dieser Ausführungsform der Herstellung der erfindungsgemäß verwendeten Phosphorsäuretriester ist in der US-PS 2 990 421 veröffentlicht.

Die durch das bevorzugte Herstellungsverfahren der erfindungsgemäß eingesetzten gemischten Phosphorsäureester erhaltenen Oligo- und Polyalkylenglykoläthergruppen bewirken den Vorteil, daß der zugesetzte Stabilisator während des Polyester-Polykondensationsprozesses nur eine sehr geringe Flüchtigkeit aufweist und somit der analytisch bestimmbare Phosphor-Gehalt im Polyester nur geringfügig unter dem auf Grund der Einsatzmenge berechneten liegt.

Die erfindungsgemäß als Lichtstabilisatoren verwendeten gemischten Phosphorsäureester können auch auf anderen Wegen als dem beschriebenen, der eine bevorzugte Ausführungsform darstellt, hergestellt werden. Zum Beispiel können die Mono- oder Dialkylphosphorsäurechloride mit Glykolen, bzw. Mischungen von Glykolen, durch Erhitzen bei atmosphärischem Druck und bei vermindertem Druck zu Phosphorsäuretriestern umgesetzt werden, wie in der US-PS 3 097 184 (Beispiel 2) beschrieben. Eine Aussage über den Umsetzungsgrad bzw. die abgespaltene Menge Chlorwasserstoff ist nicht gemacht. Durch Zusatz eines säurebindenden Mittels sind bessere Umsetzungen zu erreichen (siehe dazu: Houben-Weyl, Bd. XII/2, S. 315—317). Anschließend muß aber das entstandene anorganische oder organische Salz quantitativ abgetrennt werden da sonst Störungen bei der Polyesterherstellung auftreten und die Polyester-Eigenschaften negativ beeinflußt werden. Auf ähnliche Weise können durch Reaktion von Phosphoroxychlorid, $POCl_3$, mit Glykolen, Polyglykolen oder Mischungen derselben und gleichzeitiger Anwesenheit von Alkanolen — oder auch in einer nachfolgenden Reaktionsstufe — bei gleichzeitiger Anwesenheit einer Base als Chlorwasserstoffakzeptor die oben beschriebenen erfindungsgemäßen gemischten Phosphorsäuretriester hergestellt werden (vgl. JA-PS 64 30 154; C. A. 62, 11737 a). Eine weitere Möglichkeit ihrer Herstellung besteht in einer Umesterungsreaktion eines niederen Trialkylphosphats mit Glykolen. Diese Reaktion erfolgt auch bei höheren Temperaturen ohne einen Katalysator nur partiell und sehr langsam unter gleichzeitiger partieller Hydrolyse. Für eine brauchbare Umesterungsreaktion mit höheren Alkoholen bzw. Glykolen und Polyglykolen sind deshalb basische Katalysatoren erforderlich (siehe: Houben-Weyl, Bd. XII/2, S. 371). Zur Verwendung so hergestellter gemischter Phosphorsäuretriester als Polyester-Stabilisatoren müssen die basischen Zusatzmittel vorher aus der Reaktionsmischung entfernt bzw. abgetrennt werden.

In der schon oben erwähnten DE-AS 1 152 259 ist als Polyester-Stabilisator zur Stabilisierung nach der Umesterung von Dimethylterephthalat das »Tris-(2-hydroxyethyl)-phosphat« aufgeführt. Diese Verbindung hat bei einer Verwendung zur Lichtstabilisierung des mattierten Direktveresterungsrohstoffes aber wesentliche Nachteile. Da sie drei endständige, primäre Hydroxylgruppen besitzt, kann sie bei dem Polykondensationsprozeß als trifunktionelle Verbindung reagieren und als Verzweigungsbzw. Vernetzungspunkt in den Polyester eingebaut werden (vgl. M. C. St. Cyr, SPE Transactions 1, No. 1,47 — 51 (1961)). Dies führt bekanntermaßen je nach Menge an zugesetzter trifunktioneller Verbindung zu Polyestern mit deutlich veränderten Eigenschaften, z. B. einer höheren Schmelzviskosität, geringerer Festigkeit und höherer Quersprödigkeit der Fäden, alles Eigenschaften, die nur in Spezialfällen als Polyester-Eigenschaften gewünscht werden. Die erfindungsgemäß eingesetzten Stabilisatoren sind aber in bezug auf die Hydroxylgruppen mono- oder bifunktionell, können also in die lineare Polyesterkette eingebaut werden oder sich als Endgruppe am Polyestermolekül befinden. Infolge der geringeren Stabilisatorkonzentration tritt auch praktisch keine Störung der Polykondensationsreaktion durch Kettenabbruch ein.

Bei einer Herstellung von »Tris-(2-hydroxyethyl)-phosphat« durch Ethylenoxid-Addition an Phosphorsäure kann aus den oben erläuterten Gründen keine reine, definierte Verbindung erhalten werden, da Polyethylenglykoläther-Einheiten unterschiedlicher Kettenlänge als Estergruppen entstehen. Dadurch hat dieser Stabilisator gegenüber den erfindungsgemäß eingesetzten Mischestern den zusätzlichen Nachteil eines erheblich geringeren Phosphorgehaltes im Molekül, so daß entsprechend eine größere Menge Stabilisator dem Polyester zugesetzt werden muß, wenn zur Erzielung des gewünschten Stabilisierungseffektes eine bestimmte Phosphor-Konzentration im Polyester erforderlich ist. Dadurch können dann die oben erwähnten Nachteile der trifunktionellen Verbindung verstärkt auftreten.

Die zur Herstellung der erfindungsgemäß eingesetzten Phosphorsäuretriester verwendeten sauren Alkylphosphate sind bevorzugt Methylphosphate, d. h. Monomethylphosphat, Dimethylphosphat oder auch Mischungen aus beiden. Es können aber auch Ethyl-, Propyl- oder Butylphosphate verwendet werden. Diese sauren Alkylphosphate können beispielsweise gewonnen werden durch Umsetzung einer Polyphosphorsäure mit bestimmtem $P_2O_5$-Gehalt mit einer bestimmten berechneten Menge eines Alkanols mit 1 bis 4 C-Atomen, bevorzugt mit Methanol. Durch Oxidation von Dialkylphosphiten zu Dialkylphosphaten können ebenfalls Ausgangsverbindungen für die erfindungsgemäß eingesetzten gemischten Phosphorsäureester erhalten werden.

Die zur Addition an die sauren Alkylphosphate verwendeten Alkylenoxide können Ethylenoxid, Propylenoxid oder Butylenoxid sein. Bevorzugt wird Ethylenoxid verwendet.

Die Menge des zur Lichtstabilisierung der mattierten Polyester zugesetzten Stabilisators hängt in erster Linie vom Mattierungsgrad des Polyesters ab, d. h. wieviel $TiO_2$-Pigment im Polyester inkorporiert ist und zum anderen von der Kristallform des Titandioxids und von dessen Herstellungsweise. In der Praxis kommen bei Polyester-Fasern und -Fäden Gehalte von etwa 0,04 bis etwa 1,0 Gew.-% vor. Dies erfordert naturgemäß eine ähnliche Variation bei der zugesetzten Stabilisatormenge. Für die Stabilisierungswirkung ist hauptsächlich die zugesetzte Menge an fünfwertigem Phosphor maßgebend. Deshalb ist auch der Phosphorgehalt der Stabilisator-Verbindung zu berücksichtigen. Je höher der Gehalt an Alkylgruppen, insbesondere an Methylgruppen, desto höher ist der Phosphor-Gehalt der Mischester und um so weniger Stabilisator wird im Polyester benötigt. Die zugesetzten Stabilisatormengen werden deshalb auf den Phosphor-Gehalt im fertigen Polyester bezogen. Dieser kann im Bereich von 10 ppm bis 500 ppm Phosphor, vorzugsweise 20–500 ppm Phosphor, insbesondere aber bei den meisten praktischen Anwendungszwecken zwischen 30 und 200 ppm Phosphor liegen.

Das zur Polyesterbildung mit der Terephthalsäure verwendete Glykol kann ein Polymethylenglykol mit 2 bis 10 C-Atomen sein, aber auch ein cyclisches Glykol wie 1,4-Bis-(hydroxymethyl)-cyclohexan und ähnliche Verbindungen. Bevorzugt wird Ethylenglykol verwendet zwecks Herstellung des technisch bedeutendsten Polyesters, dem Polyethylenterephthalat. Außer der reinen Terephthalsäure können auch Terephthalsäure plus andere Dicarbonsäuren eingesetzt werden, bzw. nach der Veresterungsstufe deren Bisglykolester mit den genannten Glykolen.

Die Vorteile der Erfindung gehen aus der folgenden Tabelle hervor, in der die Lichtbeständigkeit von mattierten Polyester-Filamentgarnen verglichen werden.

Belichtungsprüfung in einem Xenotest-Gerät[1]

| Polyethylenterephthalat-Filamentgarne vom Titer dtex 56f24 | Ausgangswerte | | | 500 Wlst.[3] | | 750 Wlst.[3] | |
|---|---|---|---|---|---|---|---|
| | $TiO_2$[2] Gehalt Gew.-% | Reiß-fest. cN/tex | Reiß-dehn. % | RRF[4] % | RRD[4] % | RRF % | RRD % |
| 1. nach dem DMT-UE-Verfahren[5] | 0,38 | 46,5 | 26,0 | 92,2 | 83,1 | 89,7 | 76,9 |
| 2. nach dem TS-Direktverest.-Verfahren[6] | 0,38 | 41,0 | 23,8 | 67,1 | 65,5 | 58,5 | 62,2 |
| 3. wie 2., mit zusätzl. erfindungsgemäß zugesetzten Stabilisatoren[6] | | | | | | | |
| a) 0,08 Gew.-% | 0,38 | 43,3 | 31,7 | 91,2 | 72,9 | 85,9 | 66,2 |
| b) 0,13 Gew.-% Phosphorsäureester[7] mit 7,2 Gew.-% P | 0,38 | 41,4 | 29,2 | 92,3 | 83,6 | 88,6 | 75,3 |
| c) 0,15 Gew.-% | 0,38 | 42,3 | 26,8 | 93,6 | 83,2 | 91,3 | 77,6 |
| d) 0,07 Gew.-% Phosphorsäureester[8] mit 11,1 Gew.-% P | 0,38 | 44,1 | 22,3 | 89,5 | 76,2 | 86,8 | 69,3 |
| e) 0,06 Gew.-% Phosphorsäureester[7] mit 7,7 Gew.-% P | 0,38 | 46,5 | 22,5 | 85,4 | 91,1 | 79,8 | 86,7 |
| 4. nach dem DMT-UE-Verfahren[5] | 1,3 | 53,1 | 21,7 | 94,0 | 94,5 | 85,3 | 89,4 |
| 5. nach dem TS-Direktverest.-Verf.[6] | 1,3 | 50,7 | 23,9 | 42,4 | 62,8 | 26,6 | 48,1 |
| 6. wie 5., mit 0,053 Gew.-% Zusatz von Mn(II)-phosphat entspr. DD-PS[9] | 1,3 | 43,0 | 25,5 | 79,1 | 69,4 | 63,5 | 63,1 |
| 7. wie 5., mit zusätzl. erfindungsgemäß zugesetzten Stabilisatoren[7] | | | | | | | |
| a) 0,16 Gew.-% Phosphorsäureester[7] mit 7,7 Gew.-% P | 1,3 | 42,8 | 27,2 | 89,3 | 77,4 | 83,7 | 71,3 |
| b) 0,12 Gew.-% Phosphorsäureester[8] mit 11,1 Gew.-% P | 1,3 | 47,3 | 25,6 | 92,4 | 84,7 | 86,0 | 79,2 |

Erläuterungen zu der Tabelle im einzelnen:
Es bedeutet:

(1) Die Belichtungsprüfung erfolgte in einem Xenotest-Gerät der Firma Quarzlampen GmbH Hanau, Typ Xenotest 450, bei 65% relativer Luftfeuchtigkeit und einer Probenraumtemperatur von 30 bis 35°C. Die Temperatur der Proben selbst, d. h. die Schwarztafeltemperatur (»black panel temperature«), betrug etwa 40°C.

(2) Das in den Polyestern während des Herstellprozesses eingearbeitete $TiO_2$-Pigment vom Anatas-Typ ist das »Kronos AD« der Kronos-Titan-GmbH, Leverkusen. Die Gew.-% beziehen sich auf den Gehalt im fertigen Polyester.

(3) »Wendelaufstunden«: Die Belichtung erfolgte im Wendelauf (Tag-Nacht-Rhythmus), so daß die reine Belichtungszeit nur 50% der Probenlaufzeit betrug.

(4) RRF bedeutet die Restreißfestigkeit, RRD die Restreißdehnung, und zwar angegeben in Prozent bezogen auf die Ausgangsreißfestigkeit und die Ausgangsreißdehnung.

(5) Nach dem Dimethylterephthalat-Umesterungsverfahren mit Ethylenglykol hergestellt: Umesterungs-Katalysator: Mn(II)-acetat; Polykondensations-Katalysator: $Sb_2O_3$; Thermostabilisator zur Blockierung des $MN^{2+}$: $H_3PO_3$.

(6) Nach dem Terephthalsäure-Direktveresterungs-Verfahren mit Ethylenglykol hergestellt, Polykondensations-Katalysator: $Sb_2O_3$. Die erfindungsgemäß zugesetzten Stabilisatoren wurden nach der Druckveresterungsstufe dem Reaktionsgemisch zugesetzt.

(7) Als Phosphorsäureester wurden Produkte eingesetzt, die aus Monomethylphosphat, $CH_3O-P (=O) (OH)_2$, durch Umsetzung mit Ethylenoxid bis zu einer Säurezahl $<0,5$ erhalten wurden und einen Phosphorgehalt von 7,2 Gew.-% bzw. 7,7 Gew.-% besaßen.

(8) Als Phosphorsäureester wurde ein Produkt eingesetzt, das aus einer Mischung von Mono- und Dimethylphosphat durch Umsetzung mit Ethylenoxid bis zu einer Säurezahl $<0,5$ erhalten wurde und einen Phosphorgehalt von 11,1 Gew.-% besaß.

(9) DD-PS 102 714. Das eingesetzte Mn(II)-phosphat, $Mn_3(PO_4)_2$, wurde vor der Zugabe in Ethylenglykol fein gemahlen, maximale Korngröße kleiner als 5 μm.

## Patentansprüche

1. Verfahren zur Herstellung linearer mattierter Polyester durch Umsetzung von Terephthalsäure und Glykolen mit 2 bis 10 C-Atomen nach dem Terephthalsäure-Direktveresterungsverfahren unter Zusatz von Sauerstoffverbindungen des Phosphors, dadurch gekennzeichnet, daß während der nach der Druckveresterungsstufe folgenden Veresterungs- und/oder Polykondensationsreaktion als Sauerstoffverbindungen des Phosphors zur Lichtstabilisierung Phosphorsäuretriester zugesetzt werden, die 1 oder 2 Alkylgruppen mit 1 bis 4 C-Atomen sowie gleichzeitig 2 oder 1 Alkylenglykol- oder Polyalkylenglykol-Gruppen enthalten, wobei die Alkylengruppen aus 2 bis 4 C-Atomen bestehen, und daß die Polyester mit $TiO_2$ mattiert werden.

2. Verfahren nach Anspruch 1, dadurch gekennzeichnet, daß die Menge der zugesetzten Phosphor-Verbindung einem Phosphor-Gehalt im Polyester von 10 bis 500 mg/kg, bezogen auf den fertigen Polyester, entspricht.

## Claims

1. A process for the manufacture of linear delustered polyesters by reaction of terephthalic acid and glycols having from 1 to 10 carbon atoms according to the direct esterification process of terephthalic acid with addition of oxygen compounds of phosphorus, which comprises adding during the esterification and/or polycondensation reaction following the pressure esterification step phosphoric acid triesters as oxygen compounds of phosphorus for stabilization to light which contain 1 or 2 alkyl groups having from 1 to 4 carbon atoms and simultaneously 2 or 1 alkyleneglycol or polyalkyleneglycol groups, the alkylene groups of which having from 2 to 4 carbon atoms, and delustering the polyesters with $TiO_2$.

2. The process as claimed in claim 1, wherein the amount of phosphorus compound added corresponds to a phosphorus content in the polyester of from 10 to 500 ppm, relative to the finished polyester.

## Revendications

1. Procédé de procéparation de polyesters linéaires matés, par réaction de l'acide téréphthalique et de glycols contenant de 2 à 10 atomes de carbone, selon la méthode avec estérification directe de l'acide téréphtalique, en présence de composés oxygénés du phosphore, procédé caractérisé en ce que pendant la réaction d'estérification et/ou de polycondensation qui fait suite à l'étape d'estérification sous pression, on ajoute, comme composés oxygénés du phosphore devant conférer une stabilité à la lumière, des **triesters de l'acide phosphorique qui renferment un ou deux radicaux alkyles contenant de 1 à 4 atomes de carbone et, en même temps, 2 ou 1 radicaux d'alkylène-glycols ou de polyalkylène-glycols, les radicaux alkylènes étant constitués de 2 à 4 atomes de carbone, et en ce qu'on mate les polyesters avec du TiO2.**

2. Procédé selon la revendication 1, caractérisé en ce que la quantité du composé du phosphore ajouté correspond à une teneur en phosphore, dans le polyester, de 10 à 500 mg/kg par rapport au polyester fini.